# EUROPEAN PATENT SPECIFICATION

(11) **EP 1 766 539 B1**
(45) Date of publication and mention of the grant of the patent: **20.11.2013**
(21) Application number: 05742513.4
(22) Date of filing: 09.05.2005
(51) Int. Cl.: G06F 17/30

(54) **DATA COMPILATION APPARATUS AND METHOD**
DATENZUSAMMENSTELLUNGSVORRICHTUNG UND -VERFAHREN
PROCEDE ET APPAREIL DE COMPILATION DE DONNEES

(30) Priority: 09.06.2004 GB 0412906
(43) Date of publication of application: 28.03.2007
(73) Proprietor: Capture Limited, Berkshire RG8 9AR (GB)
(72) Inventor: ENOCK, Arabella Jane Graham, Reading, Berkshire RG8 9AR (GB); REEVES, Oliver, Reading, Berkshire RG8 9AR (GB)
(74) Representative: Mansfield, Peter Turquand
(86) International application number: PCT/GB2005/001810
(87) International publication number: WO 2005/122011

(56) References cited:
- GB-A- 2 361 098
- GB-A- 2 395 853
- US-A1- 2003 105 749

## Description

### Field of the Invention

The present invention relates to data compilation apparatus and to a method of compiling data. It finds particular application in the use of content electronically sourced from more than one site, such as more than one digital library.

### Background of the Invention

Since the part of the Internet known as the Web has enabled electronic access by users to geographically dispersed information resources, various technologies have evolved to support this access. In order to deal with the variety of equipment used as client devices, standardised browsing applications are installed which are designed to interact with standardised searching software and document storage. Web documents themselves are widely written using markup languages which embed instructions to the browsing device on how a document should be displayed.

Another development has been the use of metadata: information embedded in addition to content in an electronic file. When a user views a document, the content appears on screen but not the metadata. Metadata can be used for different purposes but it is often used to give information about the associated content which makes the content easier to search for or to manage. For example, metadata might give keywords related to the content to support efficient searching, or administrative information such as dates of creation and/or upload.

Where content is text-based it is possible (albeit not usually efficient) to search the content itself, for instance for the presence of keywords. There is no simple equivalent where the content is an image. Standards have evolved for embedding text-based metadata with images so that the metadata can be searched and an example is known as IPTC, developed by the International Press Telecommunications Council. IPTC metadata is arranged in standardised fields containing such things as captions for the images, keywords describing the image content and "special instructions". This last field can include any restrictions affecting the right to use the image. The NAA, the Newspaper Association of America, has also been responsible for developing standards in this area, particularly aimed at exchanging information between news operations and based on metadata including information used to describe images.

Digital libraries have evolved which provide automated methods of storing, managing and accessing collections of electronic content. Metadata can be very helpful in providing administrative information for this. Software library systems are known such as "Capture Web" offered by Capture Ltd: a powerful management system and user interface for digital image libraries. For the library management side, Capture Web offers features such as account management, statistical reports, image upload and security. For the users, a digital image library which has installed Capture Web offers a search tool, a pricing and ordering system and the ability to create and share lightboxes with other users. Information about Capture Web is available over the Internet, for instance at the following URL: "www.captureweb.co.uk".

Lightboxes in this context are the electronic equivalent of the electrically illuminated screen for viewing physical slides. A lightbox is an on-screen presentation of a selection of images, often shown in a grid formation and usually used for comparison or further selection of the images. What appears on screen for each image in a grid might be a thumbnail version of the full size image, together with a text field. By clicking on the thumbnail version, the user can bring up a full size version of the selected image.

United States patent application no. US 2003/105749 A1 describes a system for implementing directory services, such as X.500 and LDAP in an SQL environment, and for providing a desired level of indexing, extensibility and scalability. In the directory service system, a plurality of objects are defined to be hierarchical, and the relationships among objects follow a tree structure where each object has a parent object and except for a root, each parent can have zero or more children. The database comprises at least one table having a plurality of rows and columns and stores a plurality of data items, each having a value, each being related to one of a plurality of data types and each having attributes defined by the directory.

### Summary of the Invention

According to a first aspect of the present invention, there is provided a server-based digital information organiser which comprises: i) an input for receiving items of information over a data communications network, said received items comprising content and metadata associated with said content; ii) data storage for storing content of said received items; iii) an item record generator for generating an item record in respect of each said received item; and iv) a metadata processor for processing metadata contained in a said received item and using said metadata to provide data for an item record generated for said item, characterised in that: said input is adapted to receive items of information from a plurality of users over the data communications network; each user in said plurality has an associated user identifier; each of said received items comprises a user identifier associated with the user from which the item was received over the network; said data storage is adapted to store associated user identifiers for said received items; said metadata processor comprises means for generating a template for metadata comprised by an item received from a source together with means for applying the template to metadata subsequently received from said source, wherein at least one field of the metadata comprised by a received item is designated for comprising rights information in respect of the received item and the metadata processor is equipped to enter said rights information to an item record generated for said item. said apparatus further comprises negotiation means for use in negotiating supply of goods in relation to a received item, said negotiation means comprises a negotiation tracker for tracking the state of at least one factor in the progress of a negotiation, said apparatus is adapted to build a plurality of user-specific libraries of content of received items and a set of item records in respect of that content, each of said user-specific libraries of content in said plurality being associated with a different user identifier; and said libraries of content are subsequently available to users accessing the apparatus over the network.

The invention can be used by a user to compile their own library of content of information items, potentially gathered from more than one network location, such as digital image files from different digital image libraries, together with information about the content derived from the metadata.

Although the metadata could be processed in other ways, preferably it comprises a predictable form of metadata, such as standardised metadata such as IPTC, so that the information in at least one field of the metadata comprised by a received item can be mapped into fields of a generated item record. Thus the metadata processor preferably comprises mapping means for mapping information from at least one field of the metadata comprised by a received item into at least one field of an item record. Although even standardised metadata is not always used entirely consistently by all sources of information items, this form of metadata processor provides a workable approach to building a set of item records.

The storage of metadata is useful for example as follows. Where items of information contain image tiles, it is sometimes the case that the image tile is only a low resolution or watermarked version of an image. If the item of information includes IPTC metadata, this might include supplier information for the subsequent purchase of a high resolution version of the image.

Another very useful type of metadata is rights information which can for example contain restrictions affecting the right to use an image. In IPTC metadata, this is presented in the "special instructions" field. In preferred embodiments of the invention, the metadata processor is equipped to enter rights information to an item record generated for an item. This enables a user to select items of information for subsequent use at least partly on the basis of whether said items are cleared for such use.

The metadata processor as described above is able to deal with items of information from a source which uses non-standardised metadata or which uses standardised metadata but in a non-standard way.

In the embodiment of the invention, the negotiation tracker may be tracking whether a price has been agreed.

Aspects of the invention can be particularly useful where at least part of the item content may comprise an image. Information items whose content is primarily textual are relatively easy to search and categorise but images are much less easy to search and otherwise deal with. This situation might arise for example where the user is compiling a library of images, potentially from more than one source and/or network location, for use in a project. The item records generated by the present invention can be particularly useful in such a scenario.

In practice, even where a received item of information primarily comprises an image, it will often be the case that at least part of the item content comprises text. For example, images will often have an associated caption.

An organiser according to the invention further comprises a user input for receiving user commands over the network. This allows the organiser to be run by one or more users from a remote location. Thus a user is not necessarily forced to load software embodying the organiser onto equipment local to them but can use any convenient computing apparatus to run the organiser as long as it is or can be connected to the network. Information items will then generally be associated with at least one identified user, for example being stored in association with a user name or other user identifier.

An organiser according to the invention further comprises assignment means for assigning received items to a project. This can be done for example by adding a tag, pointer or cross reference for an item stored in the data storage. (A "project" in this context is simply a body of work given an identity, such as a name or number.) Stored, assigned items of information can then be searched for in the data storage by assigned project. Such assignment means can preferably be run after items of information have been received at the organiser. Thus a user can send items of information to the organiser and subsequently decide where they might be used. Once assignment has been done, a user can elect to work with, for instance to view and/or annotate, a set of items assigned to any one project.

Preferably, the assignment means supports projects which may have two or more components, for instance sections and/or pages of a book or brochure. Such assignment means is preferably capable of assigning items to individual components of a project. Preferably, items can be assigned either to a project or to a project component. Project components can preferably be created retrospectively with respect to the project and items can preferably be moved between different projects and project components.

An organiser having assignment means may further provide a user interface comprising a project editor responsive to received user commands to create and/or modify a structured index to components of a project, the arrangement being such that the index can be used to access items in the data storage assigned to that project or to any component of that project.

On screen, a structured index might be shown for example as a branched hierarchy of electronic folders in much the same way as Microsoft Word software, the folders each giving access to one or more data files. Folders in the hierarchy might represent project components at different levels of the work. For example, a header folder might represent the work as a whole, the next layer of folders might represent chapters, the next layer of folders might represent pages of the chapters and the lowest layer of folders might represent topics to go on the pages. A user clicking on any on-screen folder to which one or more information items has been assigned gets access to those assigned items in the data storage.

An organiser according to the invention preferably provides a user interface comprising a project viewer for use by a user for viewing more than one aspect of a project. For example, in an organiser having a project editor as described above, a project viewer might be capable of displaying a structured index and of responding to folder selections by a user from the structured index to show information associated with items assigned to the selected folder(s). This might be content, for instance images if the information items comprise image data, and/or metadata.

The invention can thus provide a convenient way of collating a set of data files, for example digital images, from more than one network location if necessary, and organising them in relation to a work.

A project editor and project viewer can be closely related. However, the project editor relates to managing the overall structure of a project while the project viewer gives access to the content and/or metadata of items assigned to the project.

Preferably, the project viewer is adapted to offer a selection of two or more data views with respect to information items. For example, in a first data view it might give access to content such as digital images with or without text such as captions and in a second data view it might give access to data stored in the item records.

The first form of data view can be used to offer for example a lightbox-style capability in which images from several items can be viewed at the same time. If a user selects a folder to which several items with images have been assigned, the project viewer can show all the images for comparison.

The second form of data view can be particularly useful. The data in the item record has preferably been loaded automatically by the metadata processor and becomes easily available to the user by means of the project viewer. It can then be decisive in selection of items, for example if no high resolution image is available or if restrictions on use are prohibitive.

Preferably, the project viewer is adapted to do more than provide read access to content or metadata. Preferably, for example, a project viewer is also adapted to give access to the assignment means so that a user can implement decisions in respect of information items, such as reassigning between project components or deleting items. Preferably, a project viewer also supports an annotation facility so that the user can make and store notes in relation to items of information.

Examples of the organiser are adapted to provide network-based access to support shared or collaborative working. In a simple arrangement for doing this, the organiser can be arranged to allocate a URL (Universal Resource Locator) for any material to be shared. A user, or indeed the organiser, can then simply inform a collaborator, such as a client, editor or co-author, of the URL, for example by email. By directing their browser to the URL, the collaborator can view the material to be shared. In a simple arrangement for selecting material to be shared, a user who has created a folder-based index for a project can for example identify one or more folders to the organiser and the information items assigned to the folder(s) will then provide the material to be shared. Alternatively, the URL might contain an identifier for the relevant project or project folder which can be used by the organiser to query a database holding material to be shared.

Preferably, material to be shared is viewable in the form of a data view offered by the project viewer described above. Thus a collaborator might view a structured index such as a set of folders from which they can select a lightbox-style presentation of images for any one project component and/or they might be able to access metadata.

Functionality offered to a collaborator by the organiser is not necessarily the same as the functionality offered to the user who has initially created a structured index. For example, a collaborator may be given access to the project viewer but not to the project editor. However, a collaborator might be given access to the assignment means via the project viewer, thus being able to make editorial decisions about assignment of items to project components.

In order to provide a level of security, an organiser according to an embodiment of the invention preferably further comprises user authentication means for use in network-based collaboration between users.

To support collaborative working, the organiser preferably provides write access to at least one comment field to a collaborator, for instance using an annotation facility of the project viewer mentioned above. This allows a user who has set up a project to select and compare appropriate images and then present a project or project component to a collaborator via a URL link as described above. The collaborator can then use the write access to comment.

When a source such as a digital image library makes items of information available over a network, the items may be representative of goods for supply but may not comprise the goods themselves. For example, a digital library may make low resolution or watermarked versions of an image available but access to a high resolution version of the image has to be separately negotiated. Further, terms for supply of a high resolution image may be dependent on factors such as proposed usage.

Because terms for supply of a high resolution image may be dependent on factors such as proposed usage, it is useful if an organiser according to an embodiment of the invention further comprises a usage data store for storing usage data in relation to one or more received items, for use in negotiating supply of goods in relation to said one or more received items. This supports increased automation of a negotiation process.

Preferably, an organiser according to the invention further comprises a contact management system for storing data in relation to contacts for use in operation of the organiser. In such an arrangement, where an organiser has negotiation means, the negotiation means can be arranged to collate a set of received items to be subject to a negotiation, said set being identified as relevant to supply of goods from the same source contact.

In the manner of a receiver and a transmitter, an organiser according to an embodiment of the invention receives items of information which have been transmitted over a network from a source location. Examples of the invention also comprise the transmission means located at the source location. Thus an example of the invention comprises an information transmitter for transmitting selected items of information to an organiser as described above, the information transmitter comprising:
i) an address store for storing a network address for the organiser, and
ii) an input for receiving select and transmit commands from user equipment
wherein the transmitter is adapted to respond to a transmit command by transmitting one or more selected items of information to the organiser together with a user identifier.

Consequently, the organiser comprises an input for receiving items of information over the network and collation means for collating them into an information set associated with the user identifier.

An organiser according to the invention allows a user to bring together information items from different sources, for instance different digital libraries, the organiser collating the information items into a set which the user can subsequently refer to in creating or modifying a project.

An organiser according to the present invention can be used for various applications, not just the collation and editing of images for use in documents. Another application might be the collation and sorting of sales information from disparate sources. A user might have an interest in putting together a computing system for example. An organiser provides a powerful tool for collating information for different components of a computing system from different sources which can then be sorted by the user for instance according to component or capacity or price range. In a collaborative arrangement, the user might use the organiser to line up information about each component from a short list of different suppliers and associate the component information with folders of a project or a project component.

### Brief Description of the Drawings

A digital image organiser will now be described as an example of the present invention, by way of example only, with reference to the accompanying drawings in which:
Figure 1 shows a schematic diagram of a network context for the organiser;
Figure 2 shows a schematic functional block diagram of the organiser and potential image sources in the context of Figure 1;
Figure 3 shows a more detailed schematic functional block diagram of the organiser of Figure 2;
Figure 4 shows a flow diagram of steps in a method of using the organiser of Figure 2;
Figure 5 shows a schematic screen shot that might be generated in use of a project editing function of the organiser of Figure 2, over the Internet, to compile a document including images sent to the organiser;
Figures 6A, 6B and 6C show schematic screen shots that might be generated in use of a project viewing function of the organiser of Figure 2;
Figure 7 shows a schematic screen shot that might be generated in use of an Estimates/Orders function of the organiser of Figure 2 for negotiating supply of images selected by use of the organiser; and
Figure 8 shows a schematic functional block diagram of the components required to enable an image supplying site to interact over a network with the organiser of Figure 2.

### Detailed Description of the Invention

### 1. NETWORK CONTEXT

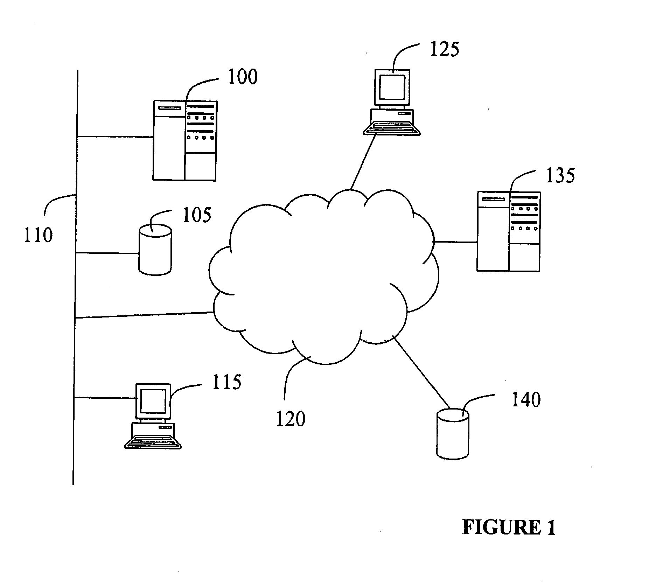

Referring to Figure 1, the organiser 200 is accessible over at least a local network 110 and over a public access network such as the Internet 120. In this example software of the organiser is installed on a locally networked server 100 which is also connected to the Internet 120. Data supporting the organiser can be stored elsewhere, such as a local or remote database 105, 140 or a remote server 135, but is conveniently stored on the same server 100 as the software of the organiser. The organiser can be accessed via a local user's computer 115, connected to the local network 110 or via a public user's computer 125 connected to the public access network 120.

### 2. IMAGE SOURCES

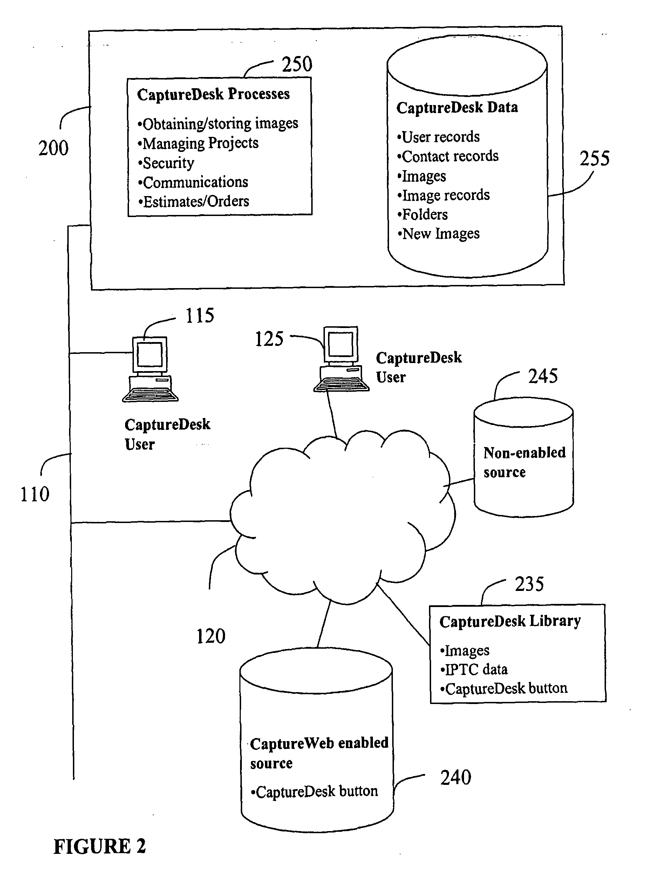

Referring to Figure 2, the organiser 200 comprises processes 250 and data 255, both loaded on the locally networked server 100. There are three types of information source, each one connected to the organiser 200 over the Internet 120. These are:
- a "CaptureDesk" library 235
- a Capture Web enabled source 240
- a non-enabled source 245

"CaptureDesk" is a general name for the organiser 200 which may also be referred to herein as a CaptureDesk organiser 200 or CaptureDesk system.

A "CaptureDesk" library 235 is a digital library which is equipped to send selected items to the organiser 200 on instruction by a user.

A Capture Web enabled source 240 is equipped with Capture Web software as described above but is also equipped to send items to the organiser 200 on instruction by a user, in the same manner as a "CaptureDesk" library 235.

A non-enabled source 245 is not equipped to send items to the organiser 200. Images from the non-enabled source 245 can be sent to the organiser 200 however, via the user's own computer 115, 125, at least some information having first been downloaded to the user's computer.

### 3. ORGANISER PROCESSES

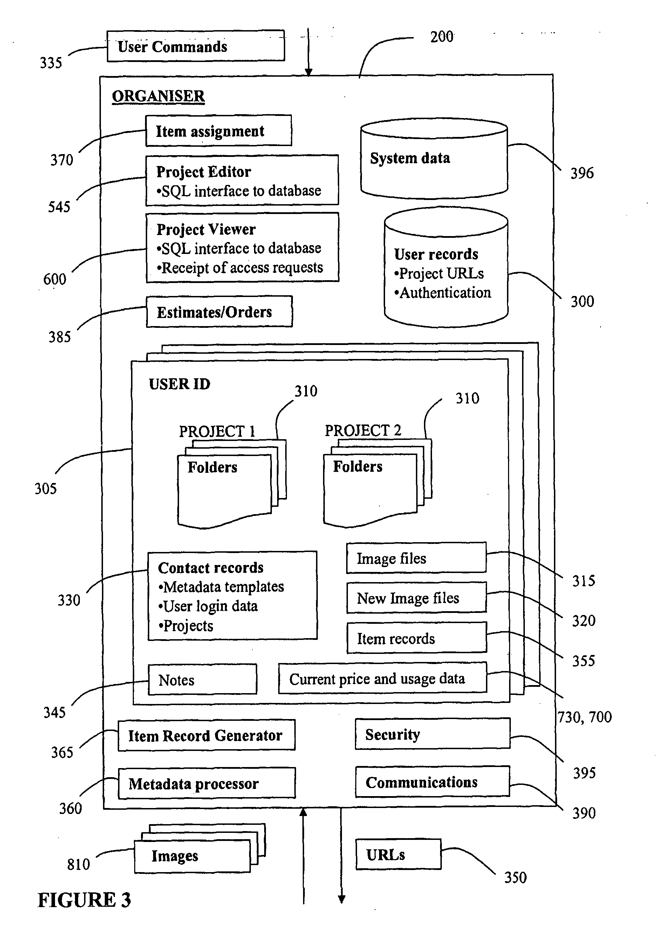

Referring to Figures 2 and 3, the organiser 200 comprises five main processes 250 supported by data storage 255. The processes 250 are:
- Obtaining/Storing images
- Managing Projects
- Security
- Communications
- Estimates/Orders

The data storage 255 falls into two main categories:
- Central user records 300
- User specific data 305

Two important processes of the organiser are obtaining/storing images and managing projects and it receives two forms of input to support these: images 340 and user commands 335. Taking the first of these, images 340 are obtained and stored as described below.

### 3.1 OBTAINING AND STORING IMAGES 340

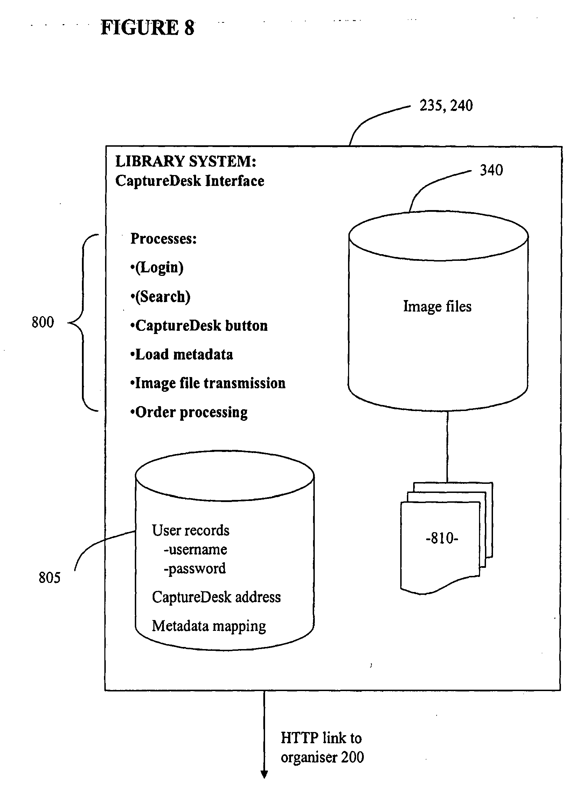

Referring to Figures 3 and 8 and taking first enabled sites, to qualify as a "CaptureDesk" library 235 or a Capture Web enabled source 240, the library or source 235, 240 is equipped with processes 800 and data 805 for transmitting image files 340 to the organiser 200 on command. The data 805 includes the Internet address of the organiser 200.

Enabled sites have their own login processes, independently of the organiser 200. However, the organiser 200 provides a particularly simple way of logging on to enabled sites. Firstly, enabled sites are automatically added as contact records 330 at the organiser 200 for each user (contact records are further discussed below under the heading **"3.3 Contact Management".)** The user can subsequently load their login details to the contact record at the organiser 200 for the enabled site 235, 240. To access an enabled site 235, 240, the user can thereafter select the contact record and get simple one button access. This has the major benefit that the user does not need to remember login details for any enabled site 235, 240.

Having logged in to an enabled site 235, 240, the user can carry out a search, thus producing a selected set of image files 810. The user is offered a "CaptureDesk" button on screen. The first time that the user has made a selection of image files 810, they can click on the "CaptureDesk" button. This triggers a process for transmitting to the organiser 200 the selection of images 810 together with a user identifier and password for the relevant user (this may be obtained by the library or source 235, 240 by having the user log in to the CaptureDesk function separately from their login to the library or source 235, 240). For all subsequent times that the user selects files from that enabled site 235, 240, the username and password have been stored as local data 805 and need not be re-entered.

The image files 810 which are the results of a search comprise image content (i.e. the image itself) together with metadata. The image content may be for example low resolution or watermarked versions of a high resolution image held by the library or source 235, 240. The metadata, for instance present in standard IPTC fields, may include for example image captions, supplier data and special instructions.

The image files are transferred using HTTP ("Hypertext Transfer Protocol"). All metadata will be automatically embedded in an image file's IPTC header fields.

If a library or source 235, 240 offers image files 340 with metadata in a format other than IPTC, it may be necessary to provide mapping of relevant fields into fields which the organiser 200 expects. This can be done as part of the enablement of the library or source 235, 240 for CaptureDesk use. Alternatively, the CaptureDesk organiser 200 could be designed to accept files in other formats and to do the mapping for files already received at the organiser 200.

On receipt of the image files 810 at the organiser 200, they are stored in a "New Images" location 320 allocated to the user whose user identifier was received with the image files 810. Associated metadata is extracted and slotted into relevant fields for viewing by the user when they next select a stored image 320, 315. The user may search additional sites, adding images 810 selected from each, before next logging on to the organiser 200 itself. The organiser 200 stores all image files 810 received before the user next logs on to the organiser 200 in the same "New Images" location 320 allocated to that user.

As mentioned above, an alternative source of images 340 is from non-enabled sources 245. In this case, there is no "CaptureDesk" button on screen or supporting process for transferring images to the organiser 200. The user accesses the non-enabled source either independently of CaptureDesk or by clicking on a "direct logon" button of the organiser 200 which opens a new window for direct logon to the non-enabled source 245. Once logged on, the user searches for images using a Web browser, such as Internet Explorer™ or Firefox™. Images found by the search can be obtained by right mouse clicking on the desired image and saving to a folder on the user's computer 115, 125. From here, they can be uploaded to the CaptureDesk organiser 200. (Terms and conditions of the non-enabled source will usually have to be independently checked and where there is any doubt, permission should be obtained.)

In a further example of the invention, images 340 from non-enabled sources 245 may be uploaded to the CaptureDesk organiser 200 by means of CaptureDesk functionality provided on the user's computer 115, 125. In this case, there is no "CaptureDesk" button on screen or supporting process for transferring images to the organiser 200. The user accesses the non-enabled source either independently of CaptureDesk or by clicking on a "direct logon" button of the organiser 200 which opens a new window for direct logon to the non-enabled source 245. Once logged on, the user searches for images using a Web browser, such as Internet Explorer™ or Firefox™.

In this example, the process of transferring images to the organiser 200 is facilitated by additional functionality provided on the user's computer 115, 125 which assists with the transfer of the images does not need to first save the images to a folder on the computer. The additional functionality is provided in the form of an additional option provided in an extension to the context menu on the user's browser program. This additional option is added by means of a download component provided on the publicly accessible part of the Website of the organiser 200.

In the case of Internet Explorer, such a function can be added by downloading and installing the following file to the computer's registry:
[HKEY_CURRENT_USER\Software\Microsoft\lnternet Explorer\MenuExt\Send to
CaptureDesk...]
@="http://www.capturedesk.com/capdesk.php"
"Contexts"=dword:00000002
"Flags"=dword:00000000

Here, the first line of the above code defines the location (browser menu extensions) in which the file should be stored and the name of the menu option to be added. The second line defines the URL to which a page request should be redirected when the user right clicks on the option, namely the URL of the organiser 200. The third line defines the contexts in which the option should be presented; in this case the context is limited to image files, i.e. the option is only shown in the context menu when the user right clicks on an image file (rather than text or other types of files). The fourth line defines how the browser should treat the page request, in this case the browser should open the page in a separate window.

Similar functionality can be added to other Web browsers, such as Firefox™ by means of a similar software extension.

By means of this added functionality, when the user right mouse clicks on the desired image, as described above, an additional option appears saying "Send to Capture Desk". On selection of this option, the browser sends a page request to the organiser 200 containing, as a parameter of the request, the network address, namely the Uniform Resource Locator (URL), of the image from which the request has been originated. In response, the organiser 200 generates a new Web page requesting the CaptureDesk username and password of the user, which on entry begins a limited lifetime session within which the user need not re-enter their username and password. From this, the organiser identifies the user, and presents a further Web page. If the user has previously downloaded images from the current library or source 235, 240, the organiser has stored a contacts record 330, see the discussion below under the heading **"3.3 Contact Management",** against which the supplier corresponding to the image file's URL is identified, from the top level domain name base of the image file's URL. When the image file is then transferred to the organiser, in the process described below, the image file is linked to the supplier record for subsequent identification in case a further transaction is required in relation the image file. If the image file's URL is not identified in this way, a Web page is transmitted to the user enabling a new supplier record to be set up for this image file, and all subsequent image files downloaded from this supplier. The user enters the supplier details and transmits these to the organiser 200.

Once the supplier is identified, a Web page is transmitted to the user which includes the option to select a folder within the organiser to which the image should be send and stored. This functionality should be read in combination with the discussion below under the heading "3.2.1 Image **Assignment".** The user can either select to store the image files in their "New Images" location 320, or alternatively, they can use an assignment function 370 of the organiser 200 to assign each image file to a project when the image is first being stored, i.e. at this point in the procedure. To assign at this point in the procedure, the Web page sent to the user contains a drop-down list of their project folders from which to choose. If one is chosen, it may be set as a default location for subsequent image filing. If assignment is not carried out now, the next time they log on to the organiser 200 they can use an assignment function 370 of the organiser 200 to assign each image file to a project. The image assignment selection is then transmitted from the user's computer 115, 125 to the organiser 200.

Once image assignment has been completed, the organiser transmits a further Web page containing a final confirmation button to cause the transfer of the image file to the organiser. When the user confirms, the organiser performs an HTTP request directly to the library or source 235, 240, using the image file's URL previously supplied as a parameter in the original request from the user's browser, to download the image file directly from the library or source 235, 240 to the Organiser 200.

The organiser 200 is equipped with a metadata processor 360 and an item record generator 365. (Although shown separately in Figure 3, these may form part of the same software process which runs on receipt of a new image.) When the organiser 200 receives an image file 810, the metadata processor 360 does a general check for IPTC metadata in at least some fields, in addition to the supplier data mentioned above. This metadata is passed to the item record generator 365 to be loaded in appropriate fields of an item record 355 for the purpose of search and/or display and the image file itself is stored in the relevant "New Images" location 320.

The IPTC metadata which can be loaded automatically in this way might be as follows:
a) Supplier.
b) Picture/item number.
c) Descriptive information (egg caption and keywords)
d) Price (if selected by the user)
e) Usage details (if-selected by the user)
f) Rights information (if selected by the user, although this is not mandatory metadata)

A powerful advantage of the organiser 200 is the ability to show rights information for each image file 320, 315 since it can otherwise be a major administrative burden for the user, once all the images have been selected, to obtain all the necessary rights information afterwards.

Where an image file 810 comes to the organiser 200 from a site which is a non-enabled source 245, the user can enter data, such as supplier data, manually. However, some automation can be provided by processing the image file name. This can provide a picture or item number, and/or a caption for the image.

Overall, if there is information in the IPTC fields of an image file, this could be automatically brought into fields of an item record 355 in the organiser 200 that relate to the standard IPTC fields. Although there is a standard data format, different users may use the IPTC data fields differently. An option is to set up a form of field mapping in which a first image file received from a non-enabled source 245 is used as a template to see what information had been stored in which IPTC fields. In particular, this could be used in saving a field mapping profile, or "metadata template", to the contact record 330 for the relevant supplier which will be used automatically for subsequent images from that supplier.

### 3.2 MANAGING PROJECTS

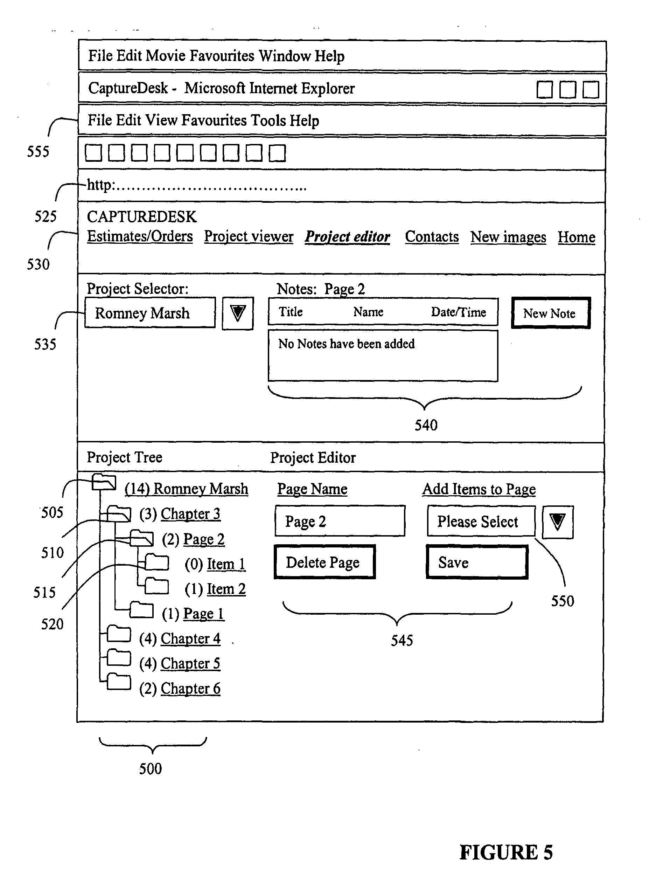

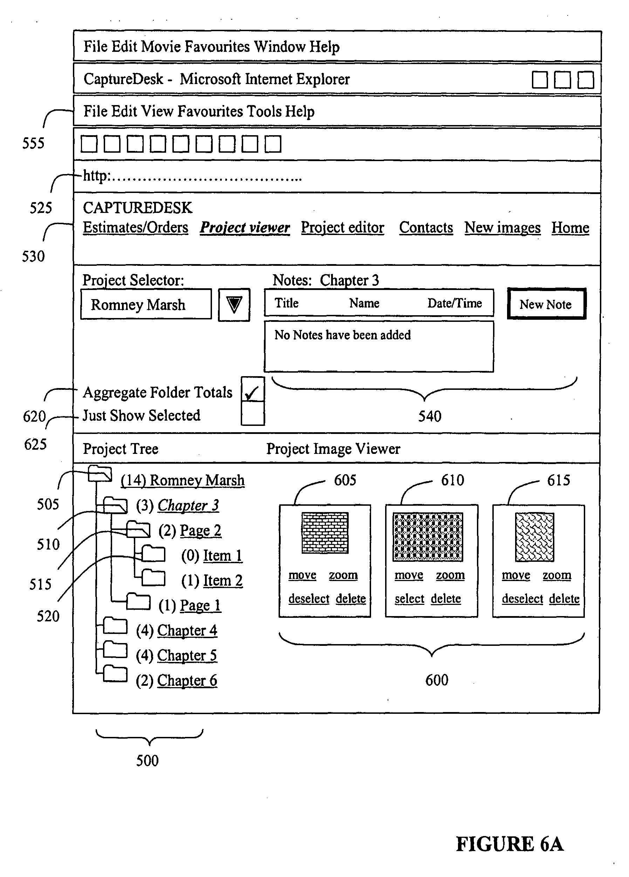

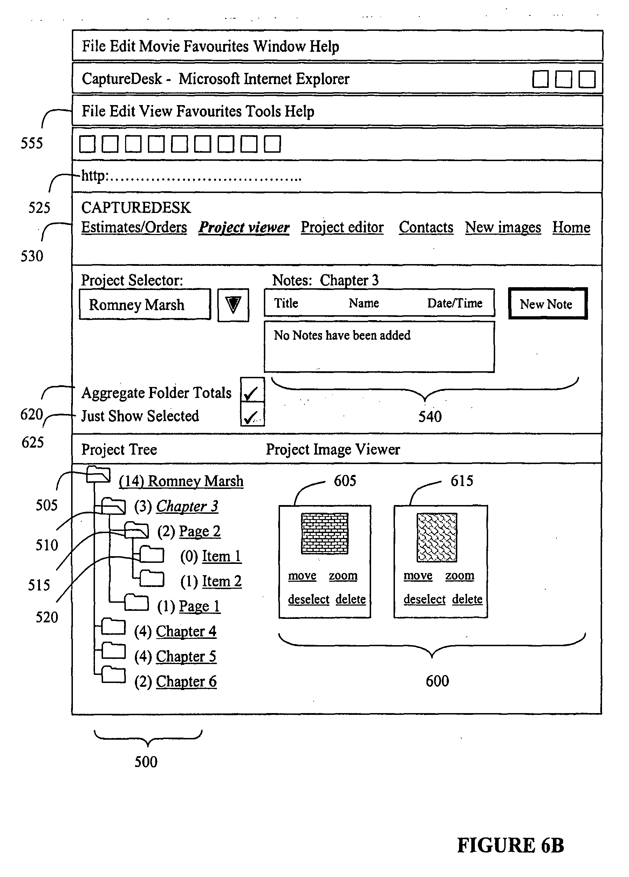

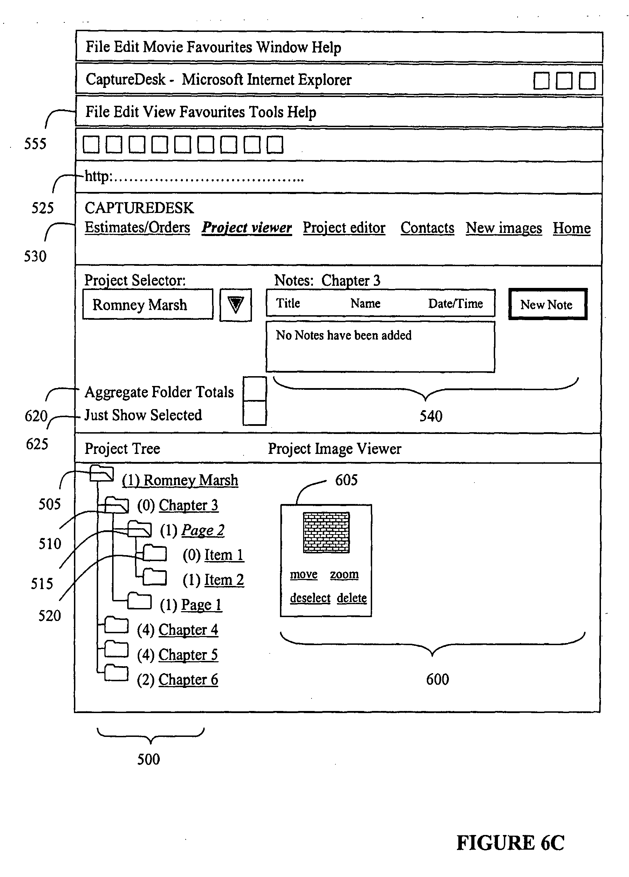

Referring to Figure 3, as mentioned above, a second important process of the organiser 200 is managing projects. Users control the building and managing of projects by inputting user commands 335 in conventional manner, for example via a Web page interface using menus, check boxes and data fields. Two important aspects are the overall editing and control of project structures and then the assignment of images within projects. These are done using a project editor 545, a screen view of which is shown in Figure 5, and a project viewer 600, screen views of which are shown in Figures 6A, 6B and 6C.

Referring to Figures 3 and 5, a project 310 is a piece of work undertaken by a user for a specified client contact. Each project when created is stored as a record in a database which includes a project identifier ("ID"). This database record also identifies the user and the specified client contact.

A user may have multiple projects 310 in hand and can select one to work on. In Figure 5, a selected project has the title "Romney Marsh". Once a project has been selected, the project editor 545 can be used to create a project tree 500 as shown, this providing a structured index comprising a set of folders created by the user for the project 310. The folders are arranged in a hierarchy of the general type used in Microsoft Word. At the top level of the tree 500, there is one project folder 505 which can give access to data concerning the whole project. At the next level down, each folder 510 is allocated to a chapter and can give access to data concerning the relevant chapter. At the next level down, each folder 515 is allocated to a page within a chapter. At the lowest level, each folder 520 is allocated to a topic within a page. Each folder of a project, in practice, is a database record which is related both to the project overall and to the other folders in the project tree 500.

### 3.2.1 Image Assignment

If a user has image files in their "New Images" location 320, the next time they log on to the organiser 200 they can use an assignment function 370 of the organiser 200 to assign each image file to a project. Multiple image files will generally be assigned to each project. Once an image file has been assigned, the organiser 200 transfers it to an "Images" location 315 for that user and creates a database record holding a relationship between the image and the project 310. This might be done at the level of a project folder 505 at the top of the project tree 500 or the user may immediately assign the image file to a folder of the project 310 which is further down the hierarchy, such as a chapter folder 510, a page folder 515 or an item folder 520. The database record will hold the relationship between the image and any folder it has been assigned to and this relationship is updated if the image assignment is subsequently changed. Once assigned, through the use of SQL (structured query-language) database queries it then becomes possible to identify the project an image has been assigned to and thus the relevant user identity and the specified client contact.

Although the images 315 themselves could be stored with the database records, in practice they are stored on the hard drive of the computing platform supporting the organiser 200 and referenced via their file names.

The set of folders 500 representing a project 310 can be created by a user before any image files have been collected, using the project editor 545. However, a project 310 can only be assigned images for which the organiser 200 can identify and link a supplier contact record 330. This might be based on input by the user (in the case of a non-enabled source 245 for example) or obtained from an IPTC field associated with an image file. Any image from a "CaptureDesk" library 235 or a Capture Web enabled source 240 has supplier data in the IPTC metadata which can be automatically extracted by the organiser 200. Alternatively, again where an image file is from a "CaptureDesk" library 235 or a Capture Web enabled source 240, the organiser 200 will already hold supplier records 330 as these are entered in the initial set-up phase of enablement. Contact records 330 in this case can be auto-created if image files from an enabled site are chosen.

A "contact record" in this context needs to contain, as a basic minimum, a name, the type of contact (supplier) and at least one email address. This is less than the data usually present in a full contact record 330 as discussed below under the heading **"3.3 Contact Management".**

Once in the CaptureDesk organiser 200, images 315 can be searched using various fields. These fields can include for example project, supplier contact (usually a library from which an image is obtained) or client contact (the person or body for which a project is being run). Further fields record the assignment of images to levels within projects so they can be located using the project tree 500. In the embodiment being described here, these further fields cover four levels of a project tree 500, from item level up to the overall project level, but this is customisable.

One further field which is important in use of the organiser 200 is a comment field. This allows a user to enter comments or annotations which will appear on screen. This is particularly useful in collaboration. The comments can be entered against any level of the project tree 500, and against specific images. This is further discussed under the heading **"3.4 Collaboration"** below.

In general, it might be noted that the folders of a project 310 can hold files of various types and can for instance hold both text and image files.

### 3.2.2 Project Management

Referring to Figures 5 to 7, several different aspects of project management are offered by embodiments of the invention. As described here, projects can be dealt with from the point of view of:
- Project structure viewing and editing
- Project image viewing and editing
- Estimates/orders

To support this, Web pages offered to the user all offer a set of links 530 including "Project editor", "Project viewer" and "Estimates/Orders". Further links enable the user to view and edit contact data ("Contacts") and to view their new images 320 since last logging on ("New images").

### 3.2.2.1 Project Management: Project Editor 545

Referring to Figure 5, on selection of the Project Editor link, a project 310 can be selected from a project menu 535 for the specific user. Each project in the menu 535 has previously been initiated and stored by the user by going to the contact record of the client they wish to create a new project for and clicking on a "New Project" button.

The project editor 545 allows structural decisions to be made with regard to overall project layout and comments or notes to be made at each level. That is, selecting a project 310 opens two options to the user: firstly a project editor 545 for controlling the number of chapters in a project, the number of pages in a chapter and the number of items on each page and secondly a notes facility 540. In the scenario shown in Figure 5, the user has clicked on the "Page 2" folder 515 in the project tree 500 and thus the project editor 545 offers the user editing options at the level of Page 2, such as deleting the page folder or adding item folders, and the notes facility 540 offers the user information about existing notes at the level of Page 2 and the option of adding new notes. The user could alternatively have selected a folder at any level in the project tree 500 and been offered the equivalent options in relation to that folder.

As mentioned above, images can be assigned to folders at any level of a project tree 500. While in "Project Editor" mode, the images themselves are not viewable but the project tree 500 shows the aggregate number of images assigned to each folder and its subordinate folders, in brackets in front of each folder name. Thus, referring to Figure 5, a project tree 500 has been created which shows folders for Chapters 3 to 6. Only the Chapter 3 folder has been opened to create subordinate folders and this shows folders for two pages, Page 1 remaining closed but Page 2 having subordinate folders for two items. Fourteen images in total are assigned to the project "Romney Marsh", three having been assigned to Chapter 3, four having been assigned to each of Chapters 4 and 5 and two having been assigned to Chapter 6. Within Chapter 3, of its three assigned images, one has been assigned to an item on Page 2, another is assigned to the Page 2 folder but not yet to a folder at item level and the third is assigned to the Page 1 folder.

Figure 5 shows an interim stage in building a project. Images have been assigned to various levels of the project but the number of items on each page, and the assignment of images to individual items, is incomplete. In a finished project, all the images initially assigned to a project will normally be assigned at the item level or deleted. This is a convenient way of first creating a pool of images for a project and then narrowing down how they will be finally distributed amongst items. To complete the process, the user can select a folder from the project tree 500 and select to add folders at the level below, such as page folders to a chapter folder and item folders to a page folder. However, since images themselves cannot be viewed using the project editor 545, image assignment to the various folders will be done using the project viewer function 600 as described below.

### 3.2.2.2 Project Management: Project Viewer 600

The project editor 545 described above allows the user to perform operations on the project tree 500 but doesn't show selected images themselves. Referring to Figures 3 and 6A, the project viewer 600 conversely shows the actual images assigned to selected folders, at least in low resolution or thumbnail versions. The project viewer 600 comprises a project access mechanism which queries a database using SQL statements in known manner to find stored images 315 and item records 355 associated with a project.

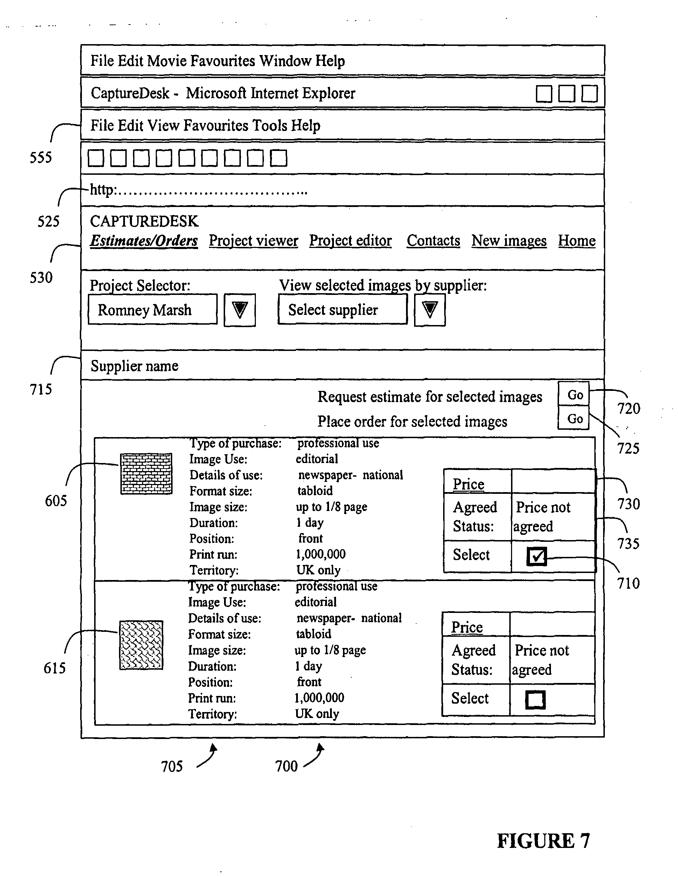

The project viewer 600 has three main functions for the user:
- image assignment amongst folders
- selection of images to take forward to the Estimates/Orders function for which a screen view is shown in Figure 7
- access to metadata for individual images.

In the view shown in Figure 6A, the user has selected the folder 510 for Chapter 3. The project viewer 600 has presented three images to the user, these being the images assigned to Chapter 3 or to subordinate folders in Chapter 3. Each image has associated command options for the user:
- move: reassignment of the image to another folder
- zoom: firstly enlargement for better on-screen visibility and secondly access to metadata for the image such as rights and usage data
- select/deselect: a toggle function allowing an image to be selected or deselected for taking forward to the Estimates/Orders function
- delete: deletion of the image altogether from the pool of images assigned to the project

The project viewer 600 offers different combinations of images to be viewed by use of two check boxes: "Aggregate Folder Totals" 620 and "Just Show Selected" 625. These checkboxes apply different SQL database queries. In Figure 6A, the "Aggregate Folder Totals" box 620 is checked but not the "Just Show Selected" box 625. Thus for Chapter 3, the relevant SQL database query results in all the images assigned to Chapter 3 or its subordinate folders being shown and the images are shown whether or not they have been selected to be taken forward to the Estimates/Orders function.

Referring to Figure 6B, the effect of checking the "Just Show Selected" box 625 for the same view is shown. The image 610 is no longer viewable because its toggle select/deselect was set for deselection.

Referring to Figure 6C, the effect of checking neither one of the boxes 620, 625 is shown. The number of images shown as assigned to the folders at different levels is now significantly different. Although the assignment of images has not changed, Chapter 3 now shows (0) images because all the images assigned to Chapter 3 have already been assigned to page and item folders within the chapter. Thus the three images assigned to Chapter 3 have been assigned to Page 2, Item 2 and Page 1 respectively. The Project folder ""Romney Marsh" shows (1) image assigned. This single image has been assigned to the project but not to any of the folders within the project.

In the view shown in Figure 6C, Page 2 has been selected for viewing. Only one image 605 has been assigned to Page 2. Because the "Just Show Selected" box 625 has not been checked, it would not matter whether the image 605 had been selected to go forward to the Estimates/Orders function. It would be shown either way.

The image files discussed above may be of a type usually offered by image library Web modules for use by a user prior to making a selection and actually purchasing an image. Picture buyers purchase the right to use an image for a specified use. The images contained in the image files are usually of low resolution and/or watermarked. In order for example for a book publisher to be able to reproduce a selected image to an acceptable quality, usually a high resolution image file is required although in some cases the original transparency is supplied. Ordering and delivery of the high resolution image are separate processes from those described above and are described below under the heading **"3.2.2.3 Project Management: Estimates/Orders".** The Estimate/Order process allows CaptureDesk users to specify the delivery method. This might be a transparency, a compact disc, Web download or by email. Special instruction can also be specified at this point.

As mentioned above, each image assigned to a project has associated with it an image record, assembled as far as possible automatically from IPTC metadata. This record might have fields (as discussed above) including for example whether rights had been cleared; if a high resolution image is available for download; and whether a price has been agreed with the relevant supplier. These fields can generally be accessed by the user whenever a thumbnail version of an image is displayed on screen by clicking on the thumbnail version or on a "Zoom" command. This is a useful facility offered via the project viewer 600 which allows the user to deselect images where the image record indicates use could be problematic.

### 3.2.2.3 Project Management: Estimates/Orders

Referring to Figures 3 and 7, images 605, 615 can be viewed using the Estimates/Orders function 385 once they have been selected for a project by using the project viewer 600. A screen view of the Estimates/Orders function 385 is shown in Figure 7. Images are selected for viewing via the Estimates/Orders function 385 by using the "Select/Deselect" toggle function of the project viewer 600 of Figures 6A, 6B and 6C. The Estimates/Orders function 385 then allows the user to make a further selection among the images 605, 615 in order to request an estimate or place an order. Images in this respect are unlike many other products in that the purchaser may not just pay a flat rate for an image 605 but has to negotiate a price based on several factors 705, such as how the image 605 will be used, in how many copies and for how long. The CaptureDesk system can assist in this by collecting the relevant factors 705 for each project and this "usage data" 700 can be seen in Figure 7. In particular, the user can specify:
- Type of purchase
- Image Use
- Details of use
- Format size
- Image size
- Duration
- Position
- Print run
- Territory

This set of information has been found particularly useful in making the present invention.

The information may often be uniform across all the images 605, 610, 615 to be used in any one project and thus need only be entered once by the user per project. Using for example a forms interface of known type, the Estimates/Orders function can receive usage data from a user and populate the data 700 into fields for all images assigned to that project. This can be seen in Figure 7 where the project is a national newspaper. Two images 605, 615 have been selected via the project viewer 600 of Figures 6A, 6B and 6C and each image is displayed next to usage data 700 detailing how the image will be used in the project.

Each image as shown in Figure 7 is associated with a price box 730 and text field 735 for use by the user to enter a price and show whether that price has been agreed. Price negotiation can be carried out independently of the CaptureDesk system, for instance by email or telephone, and the price box 730 and text field 735 are provided so that the user can log whether a price has been agreed or not. This may often be the situation where a library provides royalty free images.

Ultimately, where the supplier is CaptureDesk-enabled, the CaptureDesk user can place an order for a chosen product via CaptureDesk, without having to go through an ordering process on each supplier's site. This ordering process is possible for multiple purchases across different sites. In an alternative arrangement to the "manual" use of the price box 730 and text field 735 as described above, it is also possible to automate monitoring of an order process. As long as usage data 700 has been entered, this can be done as follows.

The user selects the images for which they require an estimate by checking the "Select" box 710 for each one, followed by clicking on the "Go" box 720 associated with "Request Estimates for Selected Images" in the Estimates/Orders function. As shown in Figure 7, only one image 605 has been selected in this way. Once this has been done, the usage data 700 for all images for which estimates have been requested is locked and is no longer editable. Also, the "Agreed Status" text field 735 automatically reads "Request sent".

Using the contact record for the relevant supplier, an email is sent to the supplier notifying them of a URL for a Web page showing the usage data 700 for the selected image(s). (This form of information sharing is based on the same functionality as collaboration with other users and is supported by further discussion under the heading **"3.4 Collaboration"** below.) The supplier is asked to enter a price. Once the supplier enters a price, the price is entered to the price box 730 and the "Agreed Status" text field 735 automatically reads "Agreed". The supplier's response is notified to the user by use of the notes facility 540 which is further discussed under the heading **"3.4 Collaboration"** below.

At this point, the user may decide the price is prohibitive and deselect the relevant image. However, if they decide to go ahead, an order for selected images can be placed by clicking on the "Go" box 725 associated with "Place Order for Selected Images". The user is offered an opportunity to specify a delivery method such as transparency, Web download, compact disc or email, whereafter the order is placed.

The Estimates/Orders function is supplier-specific, in that images are displayed against a "Supplier Name" field 715. This enables the function to address and format communications for requesting estimates and placing orders correctly, using a supplier's contact record from the contact management system which is further described below. For obtaining images from sites that are not CaptureDesk-enabled, the user is able to annotate the process manually.

### 3.3 CONTACT MANAGEMENT

The CaptureDesk system also includes a contact management system, from which emails can be sent (to negotiate over a price for instance, or communicate with an editor, or third party, or whoever the CaptureDesk user is reporting to). Such a system could be at least partly based on a system generally like Microsoft Outlook but the contacts can be organised into types such as suppliers, clients and editors. Contacts can be cross-referenced to projects, making it possible for example for a user to view all the projects related to a supplier, editor or client.

In Figure 3, "Contact Records" 330 are shown as data located in user specific data 305 since at least some contacts, particularly clients, may be relevant to only one specific user. In practice, the "Contact Records" 330 are likely to be stored together as a single resource but cross-referenced from user records. Contact records 330 are preferably searchable according to one or more of several parameters, including for example:
- user IDs
- projects
- contact type (such as supplier/client/editor).

It is also possible for a CaptureDesk system to obtain data for the image record from contact records 330. For example, a supplier may guarantee that all images are offered with rights clearance and a high resolution image available. Whether or not the supplier subsequently enters this information in relevant IPTC fields for the images, the CaptureDesk system may enter the data to the item record 355 on the basis of a contact record 330 in the contact management system.

### 3.4 COLLABORATION

An important aspect of the organiser 200 is the ability to share information between users, for instance for collaboration with an associate, customer or editor or to share data with suppliers. This is facilitated by the creation of Web pages with unique URLs 350. The material to be shared is made available via the Web page and the URL 350 is notified to the collaborating user or supplier. The collaborating user or supplier can then make an access request to view the material by entering or clicking on the URL.

A URL 350 is usually allocated at project level, although it could be allocated-to one or more selected folders of a project. Each URL contains an encoded project identifier and an identifier for the user's client contact for the project. The encoded project identifier can be decoded and used to retrieve all the project information via a SQL query to the database. Certain client level restrictions can be set per project and this information would be held in the database and applied through the result returned from the database query.

An advantage of encoding the project identifier is that a collaborating party is not able to work from the URL to guess or compute other URLs and thus gain access to Web pages showing other projects.

An advantage of querying the database in response to each access request is that the collaborating user or supplier will always see a current version of the project.

The nature of the material to be shared, and the way it is presented to the collaborating user or supplier can be determined by the contact type. For an associate, customer or editor, a user initiates the sharing of material via the contact record for the relevant collaborating entity. A field of the contact record 330 shows the contact type. In the case of a collaborating user such as an editor, the material to be shared will usually be as seen in Figures 6A, 6B and 6C: the structured index for a project and the image files assigned to the project components together with a notes field for making comments. A version of the project viewer function 600 may also be made available in order for the collaborating user to navigate the shared material on the Web page but this will normally exclude the main navigation buttons 530.

A collaborating user such as an editor can have access to the same commands in relation to images as the originating user, these being the "move", "zoom", "select/deselect" and "delete" commands shown with the individual images. It is thus possible for the collaborating user to make selection and assignment decisions in relation to images, via the Web page. The CaptureDesk system receives these incoming commands via the Web page interface and acts on them in the same manner as for decisions of the originating user.

In a typical collaborative scenario, a picture researcher wants to get agreement or comment from an editor on a selection of images for a particular item in a project. The picture researcher calls up the contact record 330 for that editor and either selects a project 310 already entered to the contact record 330 or enters a new project. That is, the first time that a user collaborates with another user (for example an editor or supplier) on a project, they need to add the project 310 to the contact record 330 for that user. Once a project has been entered to a contact record 330, the organiser 200 allocates a URL 350. The information from that project that will be available at the URL is dictated by the contact type. The URL can be notified to the collaborating user who will then be able to access the information by pointing their browser at the URL.

In a second typical scenario, a user might want to share information of a different type and for a different purpose. In this case, the collaborating user is a supplier and the user needs to share for example usage data 700. This scenario is described under the heading **"3.2.2.3 Project Management: Estimates/Orders"** above. Because the sharing of material is initiated via a contact record of supplier type, the material will be presented in a version of the format shown in Figure 7 and will include the image files 605, 610, 615, the usage data 700 and the status of a negotiation process over price 730, 735.

A strength of collaboration using the organiser 200 is the ability to comment using a notes facility 540 as shown in Figures 6A, 6B and 6C. This can be available to any collaborating user but is important where content and selection is to be discussed, for example with an editor or co-author on a project. If a user enters a note using the notes facility 540, the organiser stores it in notes records 345 (see Figure 3) with a tag or reference to firstly the image the note was made against and secondly the relevant project/folder. When a user next logs on, any new notes that have been added to any of that user's current projects are presented to the user when they login and the user can click on a link to take them directly to the project/folder where the note was created.

As described above, the material from a project to be shared with a contact who is of the editor or peer type in regard to the project is dictated by the contact type. Alternatively, a picture researcher could narrow down the material for sharing and identify it to the organiser 200, for example by selecting a folder. All the images relevant to the folder, for instance all the images to appear in a chapter, are thus identified. The organiser 200 can put just this material together into a Web page and assign a URL. In this alternative, the amount of information made available to a collaborating user is limited.

The images shown in a presentation to go on a Web page will usually be shown as a lightbox-style presentation, in a set of thumbnail images. A collaborating user such as an editor can obtain an enlarged picture view, by clicking on a thumbnail or on a "Zoom" command, in which full details of the picture can be seen, including for example caption information. These details can be automatically drawn from IPTC fields as described above in relation to image assignment -but could also be edited if required (or filled in completely by a user if there was no IPTC data available). The organiser 200 will then save the edited or new data in relation to the associated image file.

### 3.5 USER INTERFACE

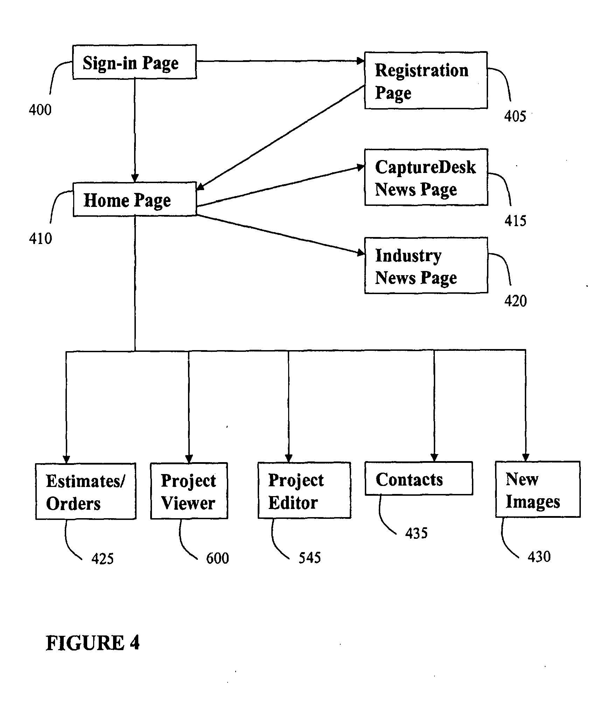

Referring to Figure 4, a user accessing the organiser 200 would have available the following pages:

### Sign-in Page 400

This will usually require a password and loads the user identity to the system for the subsequent session

### Registration Page 405

This can be used by new users to register themselves in the system

### Home page 410

Possibly some banner adverts plus buttons leading to ...

### System news page 415

To carry internal news, for example perhaps newly enlisted sources or software updates available

### Industry news page 420

It would be an option to charge relevant organisations to advertise their collections here. It would be possible to give bulletins on latest images available in library collections which would for example be of interest to picture researchers.

### Estimates/Orders 425

This offers the following functions:
* Order tracking

### Project Viewer 600

This offers the following functions:
* Images displayed in grid form - various views available.
* Ability to organise pictures by source, project, chapter, page etc
* Editor, colleague logs in using URL sent by email.
* Can tag and annotate

### Project Editor 545

This offers the following functions:
* Search
* Choose project
* Enter page number and position on page.
* Enter chapter - Can be done per image or across multiple images
* Checks, for instance for empty page numbers

### Contacts 430

This offers the following functions:
* Search sources and publishers, indeed any sort of contact entered
* List
* Categorise
* Show projects
* Email editor or colleague with link to Web page and Project Viewer 600.

### New Images 435

This offers the following functions:
*If images are waiting to be incorporated it lets the user know they are there (these would have come from an enabled site).
* Upload new images from a non-enabled site, that is from a computer being used to log on to CaptureDesk.

### Help Page

### (Not shown)

### 4. SITE ENABLEMENT

To enable a library site to be used to send images to the CaptureDesk organiser 200, it would be necessary to supply code and documentation and to go through a simple process of mapping data fields. Referring to Figure 8, the components required for enabling a site are:
- a link that will allow CaptureDesk users to log directly on to the library site
- a link back to the CaptureDesk organiser 200 for sending the information listed below for each image selected by the user:
   libraryid = "code to identify library sending image"
   libpass = "password to identify library"
   clientid = "code to identify CaptureDesk user"
   filename = "File/record identifier"
   imagepath = "path to the image being sent"
   returnurl = "link back to the page that user has come from"

The user's CaptureDesk "clientid" is sent as part of the logon process. It will need to be retained for the duration of the user's visit and is used to identify the user back to the CaptureDesk organiser 200.

### 5. USES

There is a wide range of uses for an organiser 200 according to an embodiment of the present invention, from picture researchers as described above through to consumers and anyone doing comparative buying across various web sites, either for themselves, or to present to a manager for a final decision. For instance, choosing computer equipment involves a great deal of comparing of prices and specifications and within a company these would then need to be presented to a manager for final purchase approval. Other applications might be in buying a house, or a car, or any electronic goods (music, software mobile phones, PDAs etc). The organiser 200 enables the user to go to a site and bring in information (including images) about various products (prices, descriptions etc) so a final choice can be made alongside other products.

In the image publishing world, while researchers find it handy to be able to search on-line, the business of actually collating the images from a variety of different web sites into a form that can be presented to for example a publisher's book meeting is very long-winded and tedious. There are various asset management programs available, but it is still quite a process to download images off the web, remembering various details such as rights licences, prices, source of image etc,and get them into the asset management program.

Examples of the present invention conversely are very easy to use and entirely web-based so that users don't need to load anything on to their machines. They just need to subscribe to a service. Picture researchers could sign up and effectively have their own very simple searchable website for organising pictures they have already chosen and transferred from various sites.

Although comparative shopping engines are available which offer a portal to multiple different suppliers, embodiments of the present invention can offer a personalised organiser with automated information, loading and a very versatile information management system with Internet-based collaborative working.

The above examples are to be understood as illustrative examples of the invention. It is to be understood that any feature described in relation to any one example may be used alone, or in combination with other features described, and may also be used in combination with one or more features of any other of the examples or any combination of any other of the examples.

## Claims

1. Server-based digital data compilation apparatus which comprises:
i) an input for receiving items of information over a data communications network, said received items comprising content and metadata associated with said content;
ii) data storage for storing content of said received items;
iii) an item record generator for generating an item record in respect of each said received item; and
iv) a metadata processor for processing metadata contained in a said received item and using said metadata to provide data for an item record generated for said item;
**characterised in that**:
said input is adapted to receive items of information from a plurality of users over the data communications network;
each user in said plurality has an associated user identifier:
each of said received items comprises a user identifier associated with the user from which the item, was received over the network;
said data storage is adapted to store associated user identifiers for said received items;
said metadata processor comprises means for generating a template for metadata comprised by an item received from a source together with means for applying the template to metadata subsequently received from said source, wherein at least one field of the metadata comprised by a received item is designated for comprising rights information in respect of the received item and the metadata processor is equipped to enter said rights information to an item record generated for said item.
said apparatus further comprises negotiation means for use in negotiating supply of goods in relation to a received item, said negotiation means comprises a negotiation tracker for tracking the state of at least one factor in the progress of a negotiation, whereby said apparatus is adapted to build a plurality of user-specific libraries of content of received items and a set of item records in respect of that content, each of said user-specific libraries of content in said plurality being associated with a different user identifier; and
said libraries of content are subsequently available to users accessing the apparatus over the network.

2. Apparatus according to claim 1 wherein at least part of the item content may comprise an image.

3. Apparatus according to anyone of the preceding claims wherein the metadata processor comprises mapping means for mapping information from at least one field of the metadata comprised by a received item into at least one field of an item record.

4. Apparatus according to anyone of the preceding claims wherein the input is adapted to receive items of information over the network from more than one network location.

5. Apparatus according to anyone of the preceding claims wherein the network comprises the Internet.

6. Apparatus according to anyone of the preceding claims, wherein received items of information have an associated source and the apparatus further comprises data storage for source records, each source record comprising source identity and a networkbased address for use in communication with the source.

7. Apparatus according to claim 6, further comprising an input and data storage for storing information received over the network from one or more sources, said information being subsequently available to users accessing the apparatus over the network.

8. Apparatus according to either one of claims 6 or 7, wherein a source record is capable of association with a specified user of the apparatus and may further comprise login data for the specified user for use in logging in to the source via the apparatus.

9. Apparatus according to anyone of the preceding claims, further comprising a user input for receiving user commands over the network.

10. Apparatus according to anyone of the preceding claims, further comprising assignment means for assigning received items to a project.

11. Apparatus according to claim 10, providing a user interface which comprises editing means responsive to received user commands to create and/or modify a structured index to components of a project, the assignment means being adapted to assign a received item to a project component, the arrangement being such that the index can be used to access assigned received items.

12. Apparatus according to anyone of the preceding claims, providing a user interface which comprises item display means responsive to received display commands to display content comprised by one or more received items for viewing over the network.

13. Apparatus according to claims 11 and 12 wherein a received display command identifies a project and/or a project component and the item display means is adapted to display content comprised by items assigned to the identified project and/or project component.

14. Apparatus according to either one of claims 12 or 13 wherein the item display means is adapted to respond to a received item record request to display the item record associated with an item.

15. Apparatus according to anyone of claims 12 to 14 wherein the apparatus is adapted to allocate a universal resource locator to a storage location for content displayable by the item display means, such that said content is accessible over the Internet.

16. Apparatus according to claim 15 wherein the universal resource locator comprises an identifier for a project and/or project component to which the content is assigned.

17. Apparatus according to claim 16 wherein the identifier is coded in the universal resource locator.

18. Apparatus according to anyone of claims 15 to 17 wherein a received display command identifies a project or project component and the item display means is arranged to store, at the storage location, content comprised by one or more received items assigned to the project or project component for access over the Internet.

19. Apparatus according to anyone of the preceding claims, further comprising an annotation facility for annotating received items.

20. Apparatus according to either one of claims 18 to 19, further comprising an annotation facility for making annotations in relation to content stored at the storage location.

21. Apparatus according to anyone of the preceding claims, further comprising user authentication means for use in network-based collaboration between users in relation to one or more received items.

22. Apparatus according to claim 1 wherein the negotiation means further comprises a usage data store for storing usage data in relation to one or more received items, for use in negotiating supply of goods in relation to said one or more received items.

23. Apparatus according to claim 22 wherein the apparatus is adapted to allocate a universal resource locator to a storage location for selected usage data, such that said usage data is accessible over the Internet.

24. Apparatus according to anyone of the preceding claims, further comprising a contact management system for storing data in relation to contacts for use in operation of the apparatus.

25. Apparatus according to claim 24, wherein the contact management system maintains a set of contact records, each contact record comprising at least a contact identity, a contact type and a network address associated with the contact identity.

26. Apparatus according to claims 18and 25 wherein a received display command is associated with a contact record.

27. Apparatus according to claim 26 wherein each contact record is adapted to identify one or more projects or project components and the apparatus is adapted to transmit an allocated universal resource locator to a network address of a contact record associated with a received display command, in the case that said contact record identifies the project or project component of the received display command.

28. Apparatus according to either one of claims 26 or 27 wherein the content displayable by the item display means is at least partly determined by the contact type indicated by the contact record associated with the display command.

29. Apparatus according to anyone of claims 22 to 28 , wherein said negotiation means is arranged to collate a set of received items to be subject to a negotiation, said set being identified as relevant to supply of goods from the same source contact.

30. Apparatus according to anyone of claims 23 to 29 wherein the contact management system comprises one or more data fields for storing data for use by the item record generator in generating an item record.

31. Apparatus according to claim 10 wherein said assignment means associates received items with a project identifier; and further comprising project access means for making content of items associated with a selected project identifier viewable over a network,
wherein each project identifier can be associated with two or more contact records and the apparatus further comprises notification means for transmitting notification to a network address stored in relation to a contact record, such notification comprising a network address for viewing content of items associated with the same project identifier as the contact record.

32. Apparatus according to claim 31 wherein the network address comprised by the notification is a universal resource locator for access over the Internet, said universal resource locator comprising said same project identifier.

33. Apparatus according to claim 32 wherein said universal resource locator comprises said same project identifier in coded form.

34. Apparatus according to either one of claims 32 or 33, further comprising means for receiving access requests directed to said universal resource locator, and wherein the project access means comprises query means for querying the data storage in relation to the project identifier comprised by the universal resource locator, in response to a received access request.

35. An information transmitter for transmitting selected items of information to apparatus according to anyone of the preceding claims, the information transmitter comprising:
i) an address store for storing a network address for the apparatus, and
ii) an input for receiving select and transmit commands from user equipment
wherein the transmitter is adapted to respond to a select and transmit command by transmitting one or more items of information to the apparatus together with a user identifier.

36. Computer software adapted to provide the apparatus of any of claims 1 to 34.

## Patentansprüche

1. Server-basiertes Gerät zur Kompilation von digitalen Daten, das Folgendes umfasst:
i) einen Eingang, um Informationen über ein Datenkommunikationsnetz zu erhalten, wobei die erhaltenen Informationen Inhalt und Metadaten umfassen, die mit dem Inhalt assoziiert sind;
ii) einen Datenspeicher, um den Inhalt der erhaltenen Informationen zu speichern;
iii) einen Informations-Aufzeichnungsgenerator, um eine Informationsaufzeichnung mit Bezug auf jede erhaltene Information zu erzeugen; und
iv) einen Metadaten-Prozessor, um Metadaten zu verarbeiten, die in einer der erhaltenen Informationen enthalten sind, und die Metadaten zu verwenden, um Daten für eine Informationsaufzeichnung bereitzustellen, die für die Information erzeugt wurde;
**dadurch gekennzeichnet, dass**:
der Eingang ausgelegt ist, um Informationen von einer Vielzahl von Benutzern über das Datenkommunikationsnetz zu erhalten. jeder Benutzer in der Vielzahl einen assoziierten Benutzer-Identifizierer aufweist,
jede der erhaltenen Informationen einen Benutzer-Identifizierer umfasst, der mit dem Benutzer assoziiert ist, von dem die Information über das Netz erhalten wurde;
die Datenspeicherung ausgelegt ist, um assoziierte Benutzer-Identifizierer für die erhaltenen Informationen zu speichern;
der Metadatenprozessor Mittel umfasst, um eine Vorlage für Metadaten zu erzeugen, bestehend aus einer Information, die von einer Quelle zusammen mit Mitteln zur Anwendung der Vorlage auf Metadaten, die in der Folge von der Quelle erhalten werden, erhalten werden, wobei mindestens ein Feld von Metadaten, bestehend aus einer erhaltenen Information, ausgelegt ist, um Rechteinformation mit Bezug auf die erhaltene Information zu umfassen, und der Metadatenprozessor ausgestattet ist, um die Rechteinformation in eine Informationsaufzeichnung einzugeben, die für diese Information erzeugt wurde,
wobei das Gerät weiter Verhandlungsmittel zur Verwendung bei der Verhandlung der Versorgung mit Waren mit Bezug auf eine erhaltene Information umfasst, das Verhandlungsmittel einen Verhandlungsfolger umfasst, um den Zustand von mindestens einem Faktor beim Fortschritt einer Verhandlung nachzuverfolgen, wobei das Gerät ausgelegt ist, um eine Vielzahl von Benutzerspezifischen Inhalts-Bibliotheken von erhaltenen Informationen aufzubauen, und einen Satz von Informationsaufzeichnungen mit Bezug auf diesen Inhalt, wobei jede der benutzerspezifischen Inhalts-Bibliothekten in der Vielzahl mit einem verschiedenen Benutzer-Identifizierer assoziiert ist; und
die Inhalts-Bibliotheken in der Folge den Benutzern zur Verfügung stehen, die auf das Gerät über das Netz zugreifen.

2. Gerät nach Anspruch 1, wobei mindestens ein Teil des Informationsinhalts ein Bild umfassen kann.

3. Gerät nach einem der vorhergehenden Ansprüche, wobei der Metadatenprozessor Abbildungsmittel umfasst, um Informationen von mindestens einem Feld der Metadaten, enthalten in einer erhaltenen Information, in mindestens eine Feld einer Informationsaufzeichnung abzubilden.

4. Gerät nach einem der vorhergehenden Ansprüche, wobei die Eingabe ausgelegt ist, um Informationen von mehr als einer Netzstelle über das Netz zu erhalten.

5. Gerät nach einem der vorhergehenden Ansprüche, wobei das Netz das Internet umfasst.

6. Verfahren nach einem der vorhergehenden Ansprüche, wobei die erhaltenen Informationen eine assoziierte Quelle aufweisen, und das Gerät weiter Datenspeicherung für Quellenaufzeichnungen umfasst, wobei jede Quellenaufzeichnung eine Quellenidentität und eine netzbasierte Adresse zur Verwendung bei der Kommunikation mit der Quelle umfasst.

7. Gerät nach Anspruch 6, weiter umfassend eine Eingabe- und Datenspeicherung, um Informationen zu speichern, die über das Netz von einer oder von mehreren Quellen erhalten wurden, wobei die Information in der Folge Benutzern zur Verfügung steht, die auf das Gerät über das Netz zugreifen.

8. Gerät nach einem der Ansprüche 6 oder 7, wobei eine Quellenaufzeichnung mit einem bestimmten Benutzer des Geräts assoziiert wird und weiter Anmeldungsdaten für den bestimmten Benutzer zur Verwendung bei der Anmeldung in der Quelle über das Gerät umfassen kann.

9. Gerät nach einem der vorhergehenden Ansprüche, weiter umfassend eine Benutzereingabe, um Benutzerbefehle über das Netz zu erhalten.

10. Gerät nach einem der vorhergehenden Ansprüche, weiter umfassend Zuweisungsmittel, um die erhaltenen Informationen einem Projekt zuzuweisen.

11. Gerät nach Anspruch 10, das eine Benutzerschnittstelle bereitstellt, das Aufbereitungsmittel umfasst, die auf erhaltene Benutzerbefehle antworten, um einen strukturierten Index für Komponenten eines Projekts zu erstellen und/oder zu modifizieren, wobei das Zuweisungsmittel ausgelegt ist, um eine erhaltene Information einer Projektkomponente zuzuweisen, wobei die Anordnung derart ist, dass der Index verwendet werden kann, um auf zugewiesene erhaltene Informationen zuzugreifen.

12. Gerät nach einem der vorhergehenden Ansprüche, das eine Benutzerschnittstelle bereitstellt, die Informationsanzeigemittel umfasst, die auf erhaltene Anzeigebefehle antwortet, um Inhalt, der aus einer oder aus mehreren erhaltenen Informationen besteht, zur Ansicht über das Netz anzuzeigen.

13. Gerät nach Anspruch 11 und 12, wobei ein erhaltener Anzeigebefehl ein Projekt und/oder eine Projektkomponente identifiziert, und das Informationsanzeigemittel ausgelegt ist, um Inhalt anzuzeigen, der Informationen umfasst, die dem identifizierten Projekt und/oder der identifizierten Projektkomponente zugewiesen sind.

14. Gerät nach einem der Ansprüche 12 oder 13, wobei das Informationsanzeigemittel ausgelegt ist, um auf eine erhaltene Informationsaufzeichnungsanfrage zu antworten, um die Informationsaufzeichnung, die mit einer Information verbunden ist, anzuzeigen.

15. Gerät nach einem der Ansprüche 12 bis 14, wobei das Gerät ausgelegt ist, um einen universellen Ressourcen-Positionsanzeiger einer Speicherstelle zuzuordnen, damit der Inhalt von den Informations-Anzeigemitteln angezeigt werden kann, so dass auf den Inhalt über das Internet zugegriffen werden kann.

16. Gerät nach Anspruch 15, wobei der universelle Ressourcen-Positionsanzeiger einen Identifizierer für ein Projekt und/oder eine Projektkomponente umfasst, dem/der der Inhalt zugewiesen ist.

17. Gerät nach Anspruch 16, wobei der Identifizierer im universellen Ressourcen-Positionsanzeiger codiert ist.

18. Gerät nach einem der Ansprüche 15 bis 17, wobei ein erhaltener Anzeigebefehl ein Projekt oder eine Projektkomponente identifiziert und die Informationsanzeige angeordnet ist, um an der Speicherstelle Inhalt zu speichern, bestehend aus einem oder aus mehreren erhaltenen Informationen, die dem Projekt oder der Projektkomponente für den Zugriff über das Internet zugewiesen sind.

19. Gerät nach einem der vorhergehenden Ansprüche, weiter umfassend eine Anmerkungseinrichtung, um erhaltene Informationen anzumerken.

20. Gerät nach einem der Ansprüche 18 bis 19, weiter umfassend eine Anmerkungseinrichtung, um Anmerkungen mit Bezug auf Inhalt zu machen, die an der Speicherstelle gespeichert sind.

21. Gerät nach einem der vorhergehenden Ansprüche, weiter umfassend Benutzer-Authentifizierungsmittel zur Verwendung bei einer netzbasierten Zusammenarbeit zwischen Benutzern mit Bezug auf eine oder mehrere erhaltene Informationen.

22. Gerät nach Anspruch 1, wobei das Verhandlungsmittel weiter einen Verwendungsdatenspeicher umfasst, um Verwendungsdaten mit Bezug auf eine oder mehrere erhaltene Informationen zu speichern, zur Verwendung bei der Verhandlung der Versorgung mit Waren mit Bezug auf eine oder mehrere erhaltene Informationen.

23. Gerät nach Anspruch 22, wobei das Gerät ausgelegt ist, um einen universellen Ressourcen-Positionsanzeiger einem Speicherplatz für ausgewählte Verwendungsdaten zuzuweisen, so dass auf die Verwendungsdaten über das Internet zugegriffen werden kann.

24. Gerät nach einem der vorhergehenden Ansprüche, weiter umfassend ein Kontaktverwaltungssystem, um Daten mit Bezug auf Kontakte zur Verwendung beim Betrieb des Geräts zu speichern.

25. Gerät nach Anspruch 24, wobei das Kontaktverwaltungssystem einen Satz von Kontaktaufzeichnungen beibehält, wobei jede Kontaktaufzeichnung mindestens eine Kontaktidentität, eine Kontaktart und eine Netzadresse, assoziiert mit der Kontaktidentität, umfasst.

26. Gerät nach Anspruch 18 und 25, wobei ein erhaltener Anzeigebefehl mit einer Kontaktaufzeichnung assoziiert ist.

27. Gerät nach Anspruch 26, wobei jede Kontaktaufzeichnung ausgelegt ist, um ein oder mehrere Projekte oder Projektkomponenten zu identifizieren, und das Gerät ausgelegt ist, um einen zugewiesenen universellen Ressourcen-Positionsanzeiger an eine Netzadresse einer Kontaktaufzeichnung zu übertragen, die mit einem erhaltenen Anzeigebefehl assoziiert ist, für den Fall, dass die Kontaktaufzeichnung das Projekt oder die Projektkomponente des erhaltenen Anzeigebefehls identifiziert.

28. Gerät nach einem der Ansprüche 26 oder 27, wobei der Inhalt, der durch die Informationsanzeigemittel angezeigt werden kann, mindestens teilweise von der Kontaktart bestimmt wird, die von der Kontaktaufzeichnung angegeben wird, die mit dem Anzeigebefehl assoziiert ist.

29. Gerät nach einem der Ansprüche 22 bis 28, wobei das Verhandlungsmittel angeordnet ist, um einen Satz von erhaltenen Informationen zusammenzustellen, um einer Verhandlung unterworfen zu werden, wobei der Satz als relevant für die Versorgung von Waren vom gleichen Quellenkontakt identifiziert wird.

30. Gerät nach einem der Ansprüche 23 bis 29, wobei das Kontaktverwaltungssystem ein oder mehrere Datenfelder umfasst, um Daten zur Verwendung durch den Informationsaufzeichnungsgenerator bei der Erzeugung einer Informationsaufzeichnung zu speichern.

31. Gerät nach Anspruch 10, wobei
das Zuweisungsmittel erhaltene Informationen mit einem Projekt-Identifizierer assoziiert
und weiter Projektzugriffsmittel umfasst, um den Inhalt von Informationen, die mit einem ausgewählten Projekt-Identifizierer assoziiert sind, über ein Netz sichtbar zu machen,
wobei jedes Projekt mit zwei oder mehreren Kontaktaufzeichnungen assoziiert werden kann, und wobei das Gerät weiter Aufzeichnungsmittel umfasst, um eine Aufzeichnung an eine Netzdresse zu übertragen, die mit Bezug auf eine Kontaktaufzeichnung gespeichert ist, wobei eine derartige Aufzeichnung eine Netzadresse umfasst, um den Inhalt von Informationen zu sehen, die mit dem gleichen Projekt-Identifizierer wie die Kontaktaufzeichnung assoziiert sind.

32. Gerät nach Anspruch 31, wobei die Netzadresse, bestehend aus der Aufzeichnung, ein universeller Ressourcen-Positionsanzeiger zum Zugang über das Internet ist, wobei der universelle Ressourcen-Positionsanzeiger den gleichen Projekt-Identifizierer umfasst.

33. Gerät nach Anspruch 32, wobei der universelle Ressourcen-Positionsanzeiger den gleichen Projekt-Identifizierer in codierter Form umfasst,

34. Gerät nach einem der Ansprüche 32 oder 33, weiter umfassend Mittel, um Zugangsanfragen zu erhalten, die an den universellen Ressourcen-Positionsanzeiger gerichtet sind, und wobei das Projektzugangsmittel Abfragemittel umfasst, um die Datenspeicherung mit Bezug auf den Projekt-Identifizierer, der aus dem universellen Ressourcen-Positionsanzeiger besteht, in Antwort auf eine erhaltene Zugriffsanfrage abzufragen.

35. Informationsüberträger, um ausgewählte Informationen an das Gerät zu überertragen, nach einem der vorhergehenden Ansprüche, wobei der Informationsüberträger Folgendes umfasst:
i) einen Adressspeicher, um eine Netzadresse für das Gerät zu speichern, und
ii) einen Eingang, um ausgewählte und übertragene Befehle von einer Benutzerausrüstung zu erhalten, wobei der Überträger ausgelegt ist, um auf einen ausgewählten und übertragenen Befehl, durch die Übertragung von einer oder von mehreren Informationen an das Gerät, zusammen mit einem Benutzer-Identifizierer zu antworten.

36. Computersoftware, die ausgelegt ist, um das Gerät nach jedem der Ansprüche 1 bis 34 bereitzustellen.

## Revendications

1. Appareil de compilation de données numériques sur serveur qui comprend:
i) une entrée pour recevoir des éléments d'informations sur un réseau de communication de données, lesdits éléments reçus comprenant un contenu et des métadonnées associées audit contenu ;
ii) un stockage de données pour stocker un contenu desdits éléments reçus ;
iii) un générateur d'enregistrement d'élément pour générer un enregistrement d'élément par rapport à chacun desdits éléments reçus ; et
iv) un processeur de métadonnées pour traiter des métadonnées contenues dans ledit élément reçu et utilisant lesdites métadonnées pour fournir des données pour un enregistrement d'élément généré pour ledit élément ;
**caractérisé par le fait que** :
ladite entrée est apte à recevoir des éléments d'informations en provenance d'une pluralité d'utilisateurs sur le réseau de communication de données ;
chaque utilisateur dans ladite pluralité a un identificateur d'utilisateur associé :
chacun desdits éléments reçus comprend un identificateur d'utilisateur associé à l'utilisateur à partir duquel l'élément a été reçu sur le réseau ;
ledit stockage de données est apte à stocker des identificateurs d'utilisateur associés pour lesdits éléments reçus ;
ledit processeur de métadonnées comprend un moyen pour générer un modèle pour des métadonnées comprises par un élément reçu en provenance d'une source conjointement avec un moyen pour appliquer le modèle à des métadonnées reçues ultérieurement en provenance de ladite source, au moins un champ des métadonnées comprises par un élément reçu étant désigné pour comprendre des informations de droits par rapport à l'élément reçu et le processeur de métadonnées étant équipé pour entrer lesdites informations de droits dans un enregistrement d'élément généré pour ledit élément ;
ledit appareil comprend en outre un moyen de négociation destiné à être utilisé pour négocier la fourniture de produits par rapport à un élément reçu, ledit moyen de négociation comprenant un dispositif de suivi de négociation pour suivre l'état d'au moins un facteur dans l'évolution d'une négociation, ce par quoi ledit appareil est apte à construire une pluralité de bibliothèques de contenu d'éléments reçus spécifiques à un utilisateur et un ensemble d'enregistrements d'élément par rapport à ce contenu, chacune desdites bibliothèques de contenu spécifiques à un utilisateur dans ladite pluralité étant associée à un identificateur d'utilisateur différent ; et
lesdites bibliothèques de contenu sont ultérieurement disponibles pour des utilisateurs accédant à l'appareil sur le réseau.

2. Appareil selon la revendication 1, dans lequel au moins une partie du contenu d'élément peut comprendre une image.

3. Appareil selon l'une quelconque des revendications précédentes, dans lequel le processeur de métadonnées comprend un moyen de mappage pour mapper des informations provenant d'au moins un champ des métadonnées comprises par un élément reçu dans au moins un champ d'un enregistrement d'élément.

4. Appareil selon l'une quelconque des revendications précédentes, dans lequel l'entrée est apte à recevoir des éléments d'informations sur le réseau en provenance de plus d'un emplacement de réseau.

5. Appareil selon l'une quelconque des revendications précédentes, dans lequel le réseau comprend l'Internet.

6. Appareil selon l'une quelconque des revendications précédentes, dans lequel des éléments reçus d'informations ont une source associée et l'appareil comprend en outre un stockage de données pour des enregistrements de source, chaque enregistrement de source comprenant une identité de source et une adresse de réseau destinée à être utilisée en communication avec la source.

7. Appareil selon la revendication 6, comprenant en outre une entrée et un stockage de données pour stocker des informations reçues sur le réseau en provenance d'une ou plusieurs sources, lesdites informations étant disponibles ultérieurement à des utilisateurs accédant à l'appareil sur le réseau.

8. Appareil selon l'une ou l'autre des revendications 6 ou 7, dans lequel un enregistrement de source est apte à être associé à un utilisateur spécifié de l'appareil et peut en outre comprendre des données de connexion pour l'utilisateur spécifié destinées à être utilisées dans la connexion à la source par l'intermédiaire de l'appareil.

9. Appareil selon l'une quelconque des revendications précédentes, comprenant en outre une entrée d'utilisateur pour recevoir des instructions d'utilisateur sur le réseau.

10. Appareil selon l'une quelconque des revendications précédentes, comprenant en outre un moyen d'affectation pour affecter des éléments reçus à un projet.

11. Appareil selon la revendication 10, fournissant une interface utilisateur qui comprend un moyen d'édition sensible à des instructions d'utilisateur reçues pour créer et/ou modifier un indice structuré en composants d'un projet, le moyen d'affectation étant apte à affecter un élément reçu à un composant de projet, l'agencement étant tel que l'indice peut être utilisé pour accéder à des éléments reçus affectés.

12. Appareil selon l'une quelconque des revendications précédentes, fournissant une interface utilisateur qui comprend un moyen d'affichage d'élément sensible à des instructions d'affichage reçues pour afficher un contenu compris par un ou plusieurs éléments reçus pour une visualisation sur le réseau.

13. Appareil selon les revendications 11 et 12, dans lequel une instruction d'affichage reçue identifie un projet et/ou un composant de projet et le moyen d'affichage d'élément est apte à afficher un contenu compris par des éléments affectés au projet identifié et/ou au composant de projet identifié.

14. Appareil selon l'une ou l'autre des revendications 12 ou 13, dans lequel le moyen d'affichage d'élément est apte à répondre à une requête d'enregistrement d'élément reçue pour afficher l'enregistrement d'élément associé à un élément.

15. Appareil selon l'une quelconque des revendications 12 à 14, dans lequel l'appareil est apte à allouer un localisateur de ressources uniformes à un emplacement de stockage pour un contenu pouvant être affiché par le moyen d'affichage d'élément, de telle sorte que ledit contenu est accessible sur Internet.

16. Appareil selon la revendication 15, dans lequel le localisateur de ressources uniformes comprend un identificateur pour un projet et/ou un composant de projet auquel le contenu est affecté.

17. Appareil selon la revendication 16, dans lequel l'identificateur est codé dans le localisateur de ressources uniformes.

18. Appareil selon l'une quelconque des revendications 15 à 17, dans lequel une instruction d'affichage reçue identifie un projet ou un composant de projet et le moyen d'affichage d'élément est agencé pour stocker, à l'emplacement de stockage, un contenu compris par un ou plusieurs éléments reçus affectés au projet ou composant de projet pour un accès sur l'Internet.

19. Appareil selon l'une quelconque des revendications précédentes, comprenant en outre un dispositif d'annotation pour annoter des éléments reçus.

20. Appareil selon l'une ou l'autre des revendications 18 à 19, comprenant en outre un dispositif d'annotation pour réaliser des annotations par rapport à un contenu stocké à l'emplacement de stockage.

21. Appareil selon l'une quelconque des revendications précédentes, comprenant en outre un moyen d'authentification d'utilisateur destiné à être utilisé dans une collaboration en réseau entre des utilisateurs par rapport à un ou plusieurs éléments reçus.

22. Appareil selon la revendication 1, dans lequel le moyen de négociation comprend en outre un magasin de données d'utilisation pour stocker des données d'utilisation en rapport à un ou plusieurs éléments reçus, pour une utilisation dans la négociation de la fourniture de produits par rapport audit ou auxdits éléments reçus.

23. Appareil selon la revendication 22, dans lequel l'appareil est apte à allouer un localisateur de ressources uniformes à un emplacement de stockage pour des données d'utilisation sélectionnées, de telle sorte que lesdites données d'utilisation sont accessibles sur l'Internet.

24. Appareil selon l'une quelconque des revendications précédentes, comprenant en outre un système de gestion de contacts pour stocker des données en relation avec des contacts pour une utilisation dans le fonctionnement de l'appareil.

25. Appareil selon la revendication 24, dans lequel le système de gestion de contacts conserve un ensemble d'enregistrements de contact, chaque enregistrement de contact comprenant au moins une identité de contact, un type de contact et une adresse de réseau associée à l'identité de contact.

26. Appareil selon les revendications 18 et 25, dans lequel une instruction d'affichage reçue est associée à un enregistrement de contact.

27. Appareil selon la revendication 26, dans lequel chaque enregistrement de contact est apte à identifier un ou plusieurs projets ou composants de projet et l'appareil est apte à transmettre un localisateur de ressources uniformes alloué à une adresse de réseau d'un enregistrement de contact associé à une instruction d'affichage reçue, dans le cas dans lequel ledit enregistrement de contact identifie le projet ou le composant de projet de l'instruction d'affichage reçue.

28. Appareil selon l'une ou l'autre des revendications 26 ou 27, dans lequel le contenu pouvant être affiché par le moyen d'affichage d'élément est au moins partiellement déterminé par le type de contact indiqué par l'enregistrement de contact associé à l'instruction d'affichage.

29. Appareil selon l'une quelconque des revendications 22 à 28, dans lequel ledit moyen de négociation est agencé pour collecter un ensemble d'éléments reçus à soumettre à une négociation, ledit ensemble étant identifié comme étant pertinent pour la fourniture de produits à partir du même contact de source.

30. Appareil selon l'une quelconque des revendications 23 à 29, dans lequel le système de gestion de contact comprend un ou plusieurs champs de données pour stocker des données pour une utilisation par le générateur d'enregistrement d'élément dans la génération d'un enregistrement d'élément.

31. Appareil selon la revendication 10, dans lequel ledit moyen d'affectation associe des éléments reçus à un identificateur de projet ; et comprenant en outre un moyen d'accès à un projet pour rendre un contenu d'éléments associé à un identificateur de projet sélectionné visualisable sur un réseau,
chaque identificateur de projet pouvant être associé à au moins deux enregistrements de contact et l'appareil comprenant en outre un moyen de notification pour transmettre une notification à une adresse de réseau stockée en rapport à un enregistrement de contact, une telle notification comprenant une adresse de réseau pour visualiser un contenu d'éléments associé au même identificateur de projet que l'enregistrement de contact.

32. Appareil selon la revendication 31, dans lequel l'adresse de réseau comprise par la notification est un localisateur de ressources uniformes pour un accès sur l'Internet, ledit localisateur de ressources uniformes comprenant ledit identificateur de projet identique.

33. Appareil selon la revendication 32, dans lequel ledit localisateur de ressources uniformes comprend ledit identificateur de projet identique sous forme codée.

34. Appareil selon l'une ou l'autre des revendications 32 ou 33, comprenant en outre un moyen pour recevoir des requêtes d'accès adressées audit localisateur de ressources uniformes, et dans lequel le moyen d'accès à un projet comprend un moyen d'interrogation pour interroger le stockage de données par rapport à l'identificateur de projet compris par le localisateur de ressources uniformes, en réponse à une requête d'accès reçue.

35. Emetteur d'informations pour transmettre des éléments d'informations sélectionnés à un appareil selon l'une quelconque des revendications précédentes, l'émetteur d'informations comprenant :
i) un magasin d'adresses pour stocker une adresse de réseau pour l'appareil, et
ii) une entrée pour recevoir des instructions de sélection et de transmission en provenance d'un équipement utilisateur,
l'émetteur étant apte à répondre à une instruction de sélection et de transmission par transmission d'un ou plusieurs éléments d'informations à l'appareil conjointement avec un identificateur d'utilisateur.

36. Logiciel informatique apte à fournir l'appareil selon l'une quelconque des revendications 1 à 34.
